# EUROPEAN PATENT SPECIFICATION

(11) **EP 2 403 336 B1**
(45) Date of publication and mention of the grant of the patent: **23.07.2014**
(21) Application number: 10709307.2
(22) Date of filing: 05.03.2010
(51) Int. Cl.: A01N 43/16, A01N 59/16, A01N 59/20, A01P 3/00

(54) **PLANT TREATMENT COMPOSITIONS AND METHODS FOR THEIR USE**
PFLANZENBEHANDLUNGSZUSAMMENSETZUNGEN UND VERWENDUNGSVERFAHREN DAFÜR
COMPOSITIONS DE TRAITEMENT DES PLANTES ET LEURS PROCÉDÉS D'UTILISATION

(30) Priority: 06.03.2009 US 158111 P; 10.03.2009 US 158882 P
(43) Date of publication of application: 11.01.2012
(73) Proprietor: Gowan Co., Yuma, AZ 85364 (US)
(72) Inventor: MAJURE, Wallace, Keith, West Monore, LA 71291 (US); VANDERVORT, Nicholas, William, Cresco, IA 52136 (US); DAVID, Paul, Joseph, Lititz, PA 17543 (US); DEETER, Brian, Duane, Auberry, CA 93602 (US); MELCHIOR, Gary, Joseph, Walla Walla, WA 99362 (US); BRAZZLE, James, Richard, Sancramento, CA 95829 (US); MUZYK, Kenneth, Roger, Brandon, FL 33511 (US); MIRANDA, Frank, Rene, Holtville, CA 92250 (US); CHEUNG, Tak, Wai, Yuma, AZ 85364 (US); BAIN, Oakford, George, Yuma, AZ 85365 (US); FRIENDEN, John, Edward, Kansas City, MA 64152 (US); MARSDEN, David, Alexander, Yuma, AZ 85367 (US); MOBERG, Olaf, Christian, New Brighton, MN 55112 (US); OELTJEN, Susan, Toddie, Lake Elmo, MN 55042 (US); RUEB, Christopher, John, St. Paul, MN 55119 (US); HENDRICKSON, William, Arthur, Stillwater, OK 55082 (US)
(74) Representative: Delaney, Jennifer
(86) International application number: PCT/US2010/000688
(87) International publication number: WO 2010/101659

(56) References cited:
- US-A- 2 547 261
- DATABASE WPI Week 199151 Thomson Scientific, London, GB; AN 1991-373533 XP002584492 & JP 03 251509 A (SUIDO KIKO KK) 11 November 1991 (1991-11-11)

## Description

The present invention relates to plant treatment compositions and methods for their use. More particularly the present invention relates to plant treatment compositions comprising copper alginate salts as compositions useful in the treatment of plants, particularly food crops, methods for the production of such plant treatment compositions, and methods for their use.

The control of pathogentic fungi and bacteria and other diseases is of great economic importance since fungal growth on plants or on parts of plants inhibits production of foliage, fruit or seed, and the overall quality of a cultivated crop.

US 5977023 discloses pesticidal compositions which necessarily include both a pesticide, and further necessarily include a pest-controlling active ingredient and/or a plant growth regulating active ingredient with a water insoluble alginate salt. The resultant compositions are granulated or pulvurent compositions which necessarily include both a pest-controlling active ingredient and/or a plant growth regulating active ingredient with the water insoluble alginate salt The compositions of US 5977023 are prepared by treating a solid composition containing a pest-controlling active ingredient or a plant growth-regulating active ingredient and an alginic acid or a water-soluble alginate with an aqueous solution containing a divalent or polyvalent cation which can convert the alginic acid or water-soluble alginate into a water-insoluble alginate. Otherwise, the composition of the invention is prepared by coating a solid substance containing a pesticidally active ingredient which is a pest-controlling active ingredient or a plant growth-regulating active ingredient with a water-insoluble alginate. The function of the water-insoluble alginates are cited to impart controlled release, as well as sustained release properties of the pest-controlling active ingredient and/or a plant growth regulating active ingredient.

US 2,547261 A describes a dry pest-combating composition comprising (1) a pest-combating agent, (2) a water-insoluble salt of a metal from the group comprising copper, zinc, nickel, cadmium and silver, and a defined carbohydrate, and (3) a defined ammonia yielding substance.

JP 3 251509A describes a method for producing gel beads containing copper ions, having anti-fungal and slime control activity. The gel beads may comprise sodium alginate and are said to release copper ions slowly into water.

US 2983722 discloses pesticidal compositions which include dual-metal salts depolymerized alginic acid, which depolymerized alginic acids are required in order form the dual-metal salts.

Published patent application US 2007/0010579 discloses certain copper salts of specific organic acids for use as fungicides. Such compositions may be used on plants or on inanimate substrates.

Although the prior art provides a wide variety of chemical compounds and chemical preparations or compositions which are useful as plant treatment compositions for the control of pathogentic fungi and bacteria and other diseases in plants and particularly plant crops, there nonetheless remains a real and urgent need for improved plant treatment compositions which provide such benefits. Likewise there remains a continuing need for improved methods for providing preventive and curative fungicidal activity for the protection of cultivated plants with a minimum of undesired side effects, and with relative safety for animals and humans.

It is to these and other objects that present invention is directed.

In a first aspect there are plant treatment compositions useful in the treatment of plants, particularly food crops, in order to control the incidence of and / or spread of pathogenic fungi and bacteria and other diseases in said plants, and to provide improved plant health and / or food crop yields, the plant treatment compositions comprising copper alginate salts and at least one amine compound and/or ammonia as compositions useful in the treatment of plants, particularly food crops; wherein the said compositions exclude other pest-controlling active ingredients and plant growth-regulating active ingredients.

A further aspect of the invention relates to methods for the treatment of plants, including food crops in order to control the incidence of and/or spread of pathogentic fungi and bacteria and other diseases in said plants and particularly food crops and providing improved plant health and/or food crop yields, the method comprising the application of a plant treatment composition of the first aspect, to a plant part or crop.

In a yet further aspect of the invention there is provided the use of plant treatment compositions of the first aspect in the treatment of tomato plants for controlling the incidence and spread of undesired bacterial pathogens, e.g., bacterial spot, such as may be caused by genus *Xanthomonas,* e.g, *Xanthomonas campestris* pv. *vesicatoria;* bacterial speck, such as may be caused by genus *Pseudomonas* e.g., *Pseudomonas syringae* PV *tomato;* and citrus canker, such as may be caused by genus *Xanthomonas* e.g., *Xanthomonas axonopodis* pv. *citri* These and other aspects of the invention will be better understood from the following specification.

The present inventors have discovered that plant treatment compositions comprising copper alginate salt compositions and at least one amine compound and/or ammonia are particularly useful in the treatment of plants and/or fields, particularly food crops. Such plant treatment compositions are surprisingly effective when provided in the absence of other biologically active materials, e.g., materials which exhibit or provide pesticidal, disease control, including fungicidal, mildew control or herbicidal or plant growth regulating effects. Such plant treatment compositions underscore the fact that copper alginate salt compositions are very effective when provided in the absence of other biologically active materials they are more attractive for use from an environmental standpoint due to their efficacy even in the absence of other biologically active materials. Plant treatment compositions of the invention may also include one or more non-biologically active materials which are recognized as being useful in the art.

The plant treatment compositions of the invention include one or more copper alginate salts which may be derived from reacting a metal, an inorganic and/or organic compound or species which releases a suitable metal ion, with an alginate in order to form the desired copper alginate salts.

The plant treatment compositions of the invention include one or more copper alginate salts which may be derived from reacting a metal, an inorganic and/or organic compound or species which releases a suitable metal ion, with an alginate in order to form the desired copper alginate salts, but the plant treatment compositions also necessarily include one or more amine compounds selected from: ammonia, primary amines, secondary amines, tertiary amines, as well as salts thereof. The ammonia may be formed in-situ, e.g. by reacting ammonium carbonate with water, or by other means known to the art.

The plant treatment compositions of the invention necessarily include one or more copper alginate salts. Chemical compounds which may dissociate when combined with water or a largely aqueous solvent to deliver monovalent and/or polyvalent free metal ions are particularly preferred, especially those which may deliver Cu(I) and Cu(II).

The copper alginate salts of the invention may be formed by any conventional means which is currently known to the art, such as by combining copper cations with one or more alginates, e.g. alkali metal salts of alginic acid such as sodium alginate, calcium alginate and/or potassium alginate, silver salts of alginic acid, zinc salts of alginic acid, as well as ammonium salts of alginic acid, in order to form copper alginate salts. Non-limiting examples of divalent or polyvalent cations which can convert an alginic acid or alginate into a copper alginate salt are copper cations, (especially preferably those which provide Cu(I) and Cu(II) cations). Examples of particular aqueous solutions containing a cation include those containing copper salts such as aqueous solutions of copper sulfate, copper chloride, copper nitrate, copper oxychloride or any other chemical species which may be used to provide Cu(I) and especially Cu(II) cations in an aqueous composition. In such solutions, the content of the cation salt may be of any effective amount but advantageously is usually 1% by weight through saturated concentration , preferably 5% by weight through saturated concentration in aqueous solution.

Alginates may be based on alginic acids which may be generally represented by the structure: 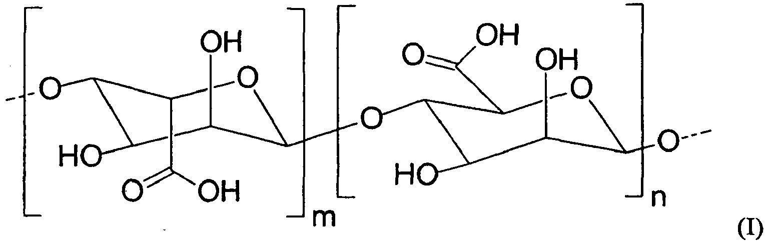 wherein m and n, independently are integers having values of sufficient magnitudes to provide a polymer of a suitable molecular weight. Typically, as indicated in formula (I) above, alginates are natural block copolymers extracted from seaweed and consist primarily (preferably essentially of, viz. contain at least 99.8%wt.) of uronic acid units, specifically 1-4a, L-guluronic and 1-b, D-mannuronic acid which are connected by 1:4 glycosidic linkages. Such alginates are typically sold in a sodium salt form but different commercial grades may also contain varying amounts of other ions, including calcium ions. Examples of commercially available grades of alginates include those sold under one or more of the following tradenames: MANUTEX® including MANUTEX® RM (approx. molecular weight of 120,000 - 190,000) and MANUTEX® RD (approx molecular weight of 12,000 - 80,000), MANUGEL® including MANUGEL® GMB (approx. molecular weight of 80,000 - 120,000), MANUGEL® GHB (approx. molecular weight of 80,000 - 120,000), and MANUGEL® LBA, MANUGEL® DBP, KELTONE® including KETONE® HV (approx. molecular weight of 120,000 - 180,000), KELTONE® LV (approx. molecular weight of 80,000 - 120,000), KELCOSOL® (approx. molecular weight of 120,000 - 190,000). Representative alginates having an excess of guluronic acid to mannuronic acid are MANUGEL® LBA, MANUGEL® DBP and MANUGEL® GHB wherein the ratio of guluronic acid units to mannuronic acid units are higher than a respective 1:1 ratio. Such are referred to as high guluronic alginates. MANUGEL® LBA, MANUGEL® DBP and MANUGEL® GHB have guluronic acid unit to mannuronic acid unit ratios of about 1.5:1. Representative alginates considered as low guluronic alginates, viz. those having a ratio of less than 1:1 of guluronic acid units to mannuronic acid units include KELTONE® HV and KELTONE® LV, which have guluronic acid unit to mannuronic acid unit ratios of about 0.6 - 0.7:1. In certain particularly preferred embodiments of the invention, high guluronic alginates are preferred for use in the plant treatment compositions.

The alginate can exhibit any number average molecular weight range, such as a high molecular weight range (about 2.05 x 10⁵ to about 3 x 10⁵ Daltons or any value therebetween; examples include MANUGEL® DPB, KETONE® HV, and TIC 900 Alginate); a medium molecular weight range (about 1.38 x 10⁵ to about 2 x 10⁵ Daltons or any value therebetween; examples include MANUGEL® GHB); or a low molecular weight range (about 2 x 10 to about 1.35 x 10⁵ Daltons or any value therebetween; examples include MANUGEL® LBA and MANUGEL® LBB). Number average molecular weights can be determined by those having ordinary skill in the art, e.g., using size exclusion chromatography (SEC) combined with refractive index (RI) and multi-angle laser light scattering (MALLS).

Low-molecular through high-molecular weight alginates acids can be used in the compositions of the present invention, the molecular weight of the alginic acid or alginate is typically 500 through 10,000,000 Daltons, preferably 1,000 through 5,000,000 Daltons, and most preferably 3,000 through 2,000,000 Daltons. The alginic acid or alginate may be used in admixture of those having different molecular weights. Furthermore mixtures of two or more different alginates and/or copper alginate salts may also be used in the plant treatment compositions of the invention.

The amounts of copper alginate salts in the plant treatment compositions of the invention may vary widely and in part, depend upon the form of the product of the plant treatment compositions. Generally speaking the copper alginate salts may be provided in amounts of as little as 0.000001 %wt. to as much as 100%wt (0.01 ppm to 1,000,000 ppm). of the plant treatment composition of which it forms a part. For example, higher concentrations are to be expected wherein the form of the plant treatment composition is a concentrate or super-concentrate composition which is provided to a user such as a plant grower with instructions to form a dilution in a liquid or solid carrier, e.g., water or other solvent, prior to application to plants. Lesser concentrations are expected wherein the plant treatment composition is provided as a ready-to-use product which is intended to be dispensed directly without further dilution from any container onto a plant. The plant treatment compositions of the invention may be applied "neat" in water, or as part of a "tank mix" with other materials or constituents.

While not wishing to be bound by theory, it is believed that the presence of the amine compound forms a complex with the copper cations which thus bind these copper ions and reduce the reactivity of the copper cations with the alginic acid or alginate until such time that, after application onto a plant or crop a major proportion of the liquid carrier, e.g., water, at least partially evaporates and thereafter the copper cations then form the desired copper alginate salts, *in situ* on the surface of the plant or crops being treated. The inventors have noted that the use of the amine compound, especially ammonia, readily complexes with the available monovalent and polyvalent metal ions, especially wherein such are Cu(I) or Cu(II) ions present, and in accordance with a preferred process of the invention, the plant treatment compositions are formed by at least a two step process wherein in a first step, one or more suitable sources of copper ions are contacted with one or more amine compounds in a suitable reaction medium, e.g., water or other solvent, in order to form a nitrogen containing copper complex, and thereafter in a subsequent process step the nitrogen containing copper complex is combined with the alginate, e.g., sodium alginate, calcium alginate and/or alginic acid, usually in a a suitable reaction medium, e.g., water or other solvent, in order to form one form a preferred form of the plant treatment composition of the invention. Such a two step process may be used to form both concentrated forms of the plant treatment compositions of the invention, or may be used to form ready to use plant treatment compositions of the invention. Such also permits for providing the plant treatment compositions as two or more separate components or materials which are combined prior to, or on the plant, plant part or crop to form the plant treatment compositions of the invention. For example such may be attained by providing two or more separate compositions in a kit or package which are intended to be combined by the ultimate product user in order to form the plant treatment compositions. The inventors have surprisingly found that plant treatment compositions formed by such a two step process exhibit physical handling properties and also feature excellent storage stability, particularly wherein the plant treatment compositions exclude the amine compound. The improved physical handling characteristics and improved storage stability, as compared to similar compositions which exclude the amine compound, permit for the production of plant treatment compositions in both concentrated form, or in a ready to use form, which has a longer shelf life, exhibit good storage stability even under adverse conditions, and thus are of commercial significance. As distinguished from plant treatment compositions which may be previously formed or formulated, e.g., weeks or months before actual use on a plant, plant part or crop, the plant treatment compositions may also be formed directly on the plant, plant surface or crop by providing a first composition containing the alginate or alginic acid preferably in a suitable carrier, e.g., water, and optionally including further constituents other than the amine compound and the inorganic and/or organic compound or species which releases a suitable copper ion, particularly Cu(I) or Cu(II), cations, and separately providing a second composition which contains the amine compound and the inorganic and/or organic compound or species which releases a suitable copper ion, particularly Cu(I) or Cu(II), cations, preferably in a suitable carrier, e.g., water, and which optionally contains further constituents, and combining the said first composition with said second composition to form the plant treatment composition shortly prior to application onto a plant, plant surface or crop, or alternately, applying the said first composition and the said second composition sequentially to a plant, plant surface, or crop, such that the desired copper alginate is formed *in situ,* directly upon the plant, plant surface or crop. Such an application process provides for the practice of the invention according to processes wherein the inorganic and/or organic compound or species which releases a suitable copper ion, particularly Cu(I) or Cu(II), cations is physically separated from the alginic acid or alginate salt (e.g., sodium alginate salt, calcium alginate salt) until just shortly prior to application, e.g., such as may be practiced by providing a first composition and a second composition outlined above to tank containing one or more further constituents but especially a carrier, e.g., water, in order to form the plant treatment composition directly in the tank and just before application to plants or crops, such as by spraying. Alternately such an application process provides for the practice of the invention according to processes wherein the said first composition and said second composition may be separately provided by spray apparatus as two distinct streams which are mixed at the inlet of, or within a nozzle of a sprayer. Alternately such an application process also provides for the practice of the invention according to a process wherein said first composition is separately applied, such as by spraying , onto a plant, plant surface or crop, and thereafter said second composition is applied, such as by spraying , onto a plant, plant surface or crop, such that the first composition and the second composition mix on the surface of the plant, or on the crop to which both compositions have been applied. The mixing on the surface of the plant or crop permits for the *in situ* formation of the copper alginate salt, preferably the preferred Cu(I) or Cu(II), cations. These processes may also be advantageously practiced by reversing the order of addition of, or the application of, the said first and said second compositions, e.g, by applying the second composition prior to tank mix, or to the plant or crop, followed by application of the first composition as the order of addition or that of application is not critical, rather it is only required that the alginic acid or alginate salt be kept separate from the inorganic and/or organic compound or species which releases a suitable copper ion, particularly Cu(I) or Cu(II), cations, until shortly prior to application onto a plant, plant surface or crop.

In a further aspect of the invention there are provided plant treatment compositions which may be formed directly on the plant, plant surface or crop by providing a first composition containing the alginate or alginic acid preferably in a suitable carrier, e.g., water, and optionally including further constituents other than the inorganic and/or organic compound or species which releases a suitable copper ion, particularly Cu(I) or Cu(II), cations, and separately providing a second composition which contains the inorganic and/or organic compound or species which releases a suitable copper ion, particularly Cu(I) or Cu(II), cations, preferably in a suitable carrier, e.g., water, and which optionally contains further constituents, and combining the said first composition with said second composition to form the plant treatment composition shortly prior to application onto a plant, plant surface or crop, or alternately, applying the said first composition and the said second composition sequentially to a plant, plant surface, or crop, such that the copper alginate is formed in situ, directly upon the plant, plant surface or crop.

Such an application process provides for the practice of the invention according to processes wherein the inorganic and/or organic compound or species which releases a suitable copper ion, particularly Cu(I) or Cu(II), cations is physically separated from the alginic acid or alginate salt (e.g., sodium alginate salt, calcium alginate salt) until just shortly prior to application, e.g., such as may be practiced by providing a first composition and a second composition outlined above to tank containing one or more further constituents but especially a carrier, e.g., water, in order to form the plant treatment composition directly in the tank and just before application to plants or crops, such as by spraying. Alternately such an application process provides for the practice of the invention according to processes wherein the said first composition and said second composition may be separately provided by spray apparatus as two distinct streams which are mixed at the inlet of, or within a nozzle of a sprayer. Alternately such an application process also provides for the practice of the invention according to a process wherein said first composition is separately applied, such as by spraying , onto a plant, plant surface or crop, and thereafter said second composition is applied, such as by spraying , onto a plant, plant surface or crop, such that the first composition and the second composition mix on the surface of the plant, or on the crop to which both compositions have been applied. The mixing on the surface of the plant or crop permits for *the in situ* formation of the copper alginate salt, preferably the preferred Cu(I) or Cu(II), cations. These processes may also be advantageously practiced by reversing the order of addition of, or the application of, the said first and said second compositions, e.g, by applying the second composition prior to tank mix, or to the plant or crop, followed by application of the first composition as the order of addition or that of application is not critical, rather it is only required that the alginic acid or alginate salt be kept separate from the suitable copper ion, particularly Cu(I) or Cu(II), cations until shortly prior to application onto a plant, plant surface or crop.

In the foregoing outlined processes, it is to be understood that the clause "shortly prior to application onto a plant, plant surface or crop" is to be understood in the context that the first said composition and the second said composition are combined with one another, optionally with one or more further constituents but preferably within a suitable carrier, not more than 24 hours, preferably not more than 18 hours, and in order of increasing preference, not more than 12 hours, 10 hours, 8 hours, 6 hours, 5 hours, 4 hours, 3 hours, 2 hours, 1 hour, 0.75 hour, 0.5 hour, 0.25, 0.1 hour, and 0.05 hour prior to dispensing by a suitable or conventional means or device, e.g., sprayer, and onto a plant, plant part or crop. In the foregoing outlined processes, wherein a first composition is applied to a plant by a first application step, followed by a separate application of the second composition in a second application step, preferably the time interval between the said first application step and the second application step is not more 6 hours, preferably not more than 4 hours, and in order of increasing preference, not more than 3 hours, 3.5 ours, 2 hours, 2.5 hours, 2 hours, 1.5 hours, 1 hour, 0.75 hour, 0.5 hour, 0.25 hour, and especially preferably not more than 0.1 hour. Particularly advantageously the said first application step and the second application step are practiced not more than 5 minutes apart, and in a particularly preferred process embodiment the said first composition and the second composition are either separately but simultaneously delivered from separate supply means, e.g., spray nozzles or jets, onto plants, plant surfaces or crops wherein the said first composition and second composition mix, or in a further particularly preferred process embodiment the said first composition and the second composition are separately supplied from separate supply sources to supply means, e.g., spray nozzles or jets, and are mixed immediately prior to being supplied to the supply means, or are mixed within the supply means such that the mixture of first composition and the second composition occurs not more than 15 seconds, preferably not more than 10 seconds, still more preferably and in order of increasing preference: not more than 8 seconds, 7 seconds, 6 seconds, 5 seconds, 4 seconds, 3 seconds, 2 seconds, 1 second, 0.5 second, before being delivered from the supply means and onto plants, plant surfaces or crops.

The plant treatment composition of the invention may also be formed by combining the first composition with the second composition, optionally with further constituents, e.g., a carrier in a vessel, such as a tank if to be applied shortly after mixing or in a storage tank if to be applied at a later date. Advantageously the plant treatment composition of the invention may also be formed by combining the first composition with the second composition, optionally with further constituents, e.g., a carrier shortly prior to application onto a plant, plant surface or crop. Mixing need not occur on the surface of the plant, or on the crop or prior to the nozzle or within the nozzle or spray head as outlined above.
Advantageously, the final end-use concentration of the one or more copper alginate salts in the plant treatment compositions, viz., the concentration of the one or more copper alginate salts in the plant treatment compositions which are in the form as applied to seeds, plants or for that matter soil, are those which are found to be effective in the treatment of a particular plant or crop, which amount is understood to be variable, as it may be affected by many factors, including but not limited to: type of plant or crop treated, treatment dosages and application rates, weather and seasonal conditions experienced during the plant or crop growing cycle, etc. Such variables are which are commonly encountered by and understood by the skilled artisan, who may make adjustments to the treatment regimen, e.g., application rate, and/or application timings and/or application frequencies. Advantageously the concentration of the one or more copper alginate salts in such end-use plant treatment compositions can be such to provide as little as 0.01 ppm, to 500,000 ppm of the copper ion(s) used to form the copper alginate salt, but preferably are between 0.01 ppm and 100,000 ppm of the copper ion(s) used to form the alginate salt, as applied to the plant or alternately as present in an end-use concentration such as a ready to use or ready to apply composition intended to be applied to a plant, plant part or crop. Surprisingly the inventors have found that the copper alginate salts of the plant treatment compositions in such final end-use concentrations or as applied to a plant concentration are effective in the treatment of plants in amounts which are typically less, and frequently far less than the amounts of the active amounts of conventional pest-controlling active ingredient and/or a plant growth-regulating active ingredient, viz., herbicidal, fungicidal or pesticidal compounds which are necessary in order to provide a comparable benefit level. Preferably the plant treatment compositions thus contain from about 0.5 ppm to 500,000 ppm, preferably from about 1 ppm to about 50,000 ppm and especially preferably from about 1 ppm to about 25,000 ppm of the metal ion(s) used to form the copper alginate salt being provided by the plant treatment composition, in the form as applied to the plant, plant part or crop. In certain particularly preferred embodiment the plant treatment compositions thus contain from about 0.5 ppm to about 25,000 ppm and in order of increasing preference not more than: 24,000 ppm, 23,000 ppm, 22,000 ppm, 21,000 ppm, 20,000 ppm, 19,000 ppm, 18,000 ppm, 17,000 ppm, 16,000 ppm, 15,000 ppm, 14,000 ppm, 13,000 ppm, 12,000 ppm, 11,000 ppm, 10,000 ppm, 9,000 ppm, 8,000 ppm, 7,000 ppm, 6,000 ppm, 5,000 ppm, 4,000 ppm, 3,000 ppm, 2,000 ppm. and 1,000 ppm, 900 ppm, 800 ppm, 700 ppm, 600 ppm, 500 ppm, 400 ppm, 300 ppm, 200 ppm or even less in certain embodiments.

The inventors have also unexpectedly discovered that the use of the copper alginate salts permits for the application at lower rates than certain metal-based commercial products (e.g., KOCIDE, ex. E.I. DuPont de Nemours), as it is believed that the applied coverage of the product permits for a more uniform, and more complete application permits for the improved deposition and retention of the compositions on plant surfaces.

The inventors have also surprisingly discovered that the copper alginate salts, used in conjunction with at least one amine compound and/or ammonia, show surprisingly good efficacy against certain copper resistant strains or pathogens on plants, which has not been effectively treated by prior art commercially available preparations, e.g. KOCIDE 2000.

Contrary to US 5977023, the present inventors have discovered that their plant treatment compositions can provide an effective treatment composition for control of pathogentic fungi and bacteria and other diseases in plants and particularly plant crops even in the absence of a pest-controlling active ingredient and/or a plant growth-regulating active ingredient.

Copper alginate salts are found to be economically feasible, and have been proven to be effective, used in conjunction with at least one amine compound and/or ammonia, as is disclosed in one or more of the examples illustrated below.

The plant treatment compositions include one or more amine compounds selected from: ammonia, primary amines, secondary amines or tertiary amines, as well as salts thereof. By way of non-limiting example, exemplary primary amines include methylamine, ethanolamine; exemplary secondary amines include dimethylamine, diethylamine, and cyclic amines such as aziridine, azetidine, pyrrolidine and piperidine; exemplary tertiary amines include trimethylamine. Further amines include ethylenediamine, diethyeneltriamine, triethylenetetramine, tetraethylenepentamine, piperazine, aminoethylpiperazine, aminoethylethanolamine, hydroxyethylpiperazine, methyldiethylenetriamine. Such amine compounds include those which would form a complex with the one or more compounds or complexes comprising the at least one metal selected from the elements represented on Groups 2-12, as well as any of the metals of Groups 13-15 of the Periodic Table of Elements ultimately used in the formation of the metal alginate salts of the plant treatment compositions taught herein. The ammonia may also be formed in situ by a suitable reaction, e.g., the reaction of ammonium carbonate with water.

Although it is contemplated that while the plant treatment compositions of the invention may be provided in a powdered or pulvurent form, it is expected that the plant treatment compositions are provided in a liquid, gel, foam or paste form. The plant treatment compositions are advantageously provided in a liquid carrier system, e.g., in an aqueous or other fluid carrier which permits for the convenient mixing of a measured quantity of a concentrated form of the plant treatment compositions with a larger volume of water or other fluid carrier in which the concentrated form is diluted, such as in forming a tank mix, or the plant treatment compositions may be provided in a form such that no further dilution is required and such plant treatment compositions may be used directly in the treatment of plants.

While not wishing to be bound by the following hypothesis, it is believed that the copper salt alginates have a degree of surface "tackiness" when a formulation containing the same is applied from an aqueous solution to plant surfaces, and that at least the copper salt alginate adhere to the plant foliage, fruit or crop to which it has been applied. This tackiness increases the amount of copper salt alginates which adhere to the plant matter surfaces and also retains the copper salt alginates on the plant surfaces which is believed to enhance their durability and retention on plant surfaces, and thereby provide a longer lasting benefit. While the mechanism is not clearly understood, it has nonetheless surprisingly been observed that the copper alginate salts appear to provide a beneficial effect even in the absence of conventional pesticides, fungicides, or herbicides particularly as is demonstrated in one or more of the following examples. It is hypothesized that the copper contributes to the beneficial effect.

Thus according to certain embodiments, in one aspect, the present invention provides plant treatment compositions which include a copper alginate salt and at least one amine compound and/or ammonia and especially preferably wherein the composition includes a sufficient amount of copper alginates which ultimately provides between 0.5 ppm and 50,000 ppm of metallic copper in the form of Cu(I) and/or Cu(II) ions as applied to a plant or plant part, and a liquid carrier, preferably a liquid carrier which is water or which is a largely aqueous liquid carrier, with the proviso that the plant treatment compositions include amine compounds selected from: ammonia, primary amines, secondary amines or tertiary amines, as well as salts thereof; without a pest-control active ingredient and/or a plant growth-regulating active ingredient present.

According to yet further preferred embodiments, in a further aspect, the present invention provides plant treatment compositions which include a copper alginate salt and/or copper salt of an alginic acid, preferably wherein the composition includes a sufficient amount of copper alginates which ultimately provides between 0.5 ppm and 50,000 ppm of metallic copper in the form of Cu(I) and/or Cu(II) ions as applied to a plant or plant part, and a liquid carrier, preferably a liquid carrier which is water or which is a largely aqueous liquid carrier, with the proviso that the plant treatment compositions include one or more amine compounds selected from: ammonia, primary amines, secondary amines or tertiary amines, as well as salts thereof, and the further proviso that the plant treatment compositions excludes other pest-controlling active ingredients and plant growth-regulating active ingredients..

In yet another aspect of the invention there are provided plant treatment compositions of the invention which are provided at least two separate constituents, one of the constituents comprising the alginic acid or alginate and optional constituents, while a separate component comprises the copper, an inorganic and/or organic compound or species which releases a suitable copper ion and optional constituents, such that the desired copper alginate salts are formed shortly prior to application onto a plant, plant surface or crop. Such plant treatment compositions provided by the foregoing method may omit, and preferably do exclude, the one or more amine compounds selected from: ammonia, primary amines, secondary amines or tertiary amines, as well as salts thereof which would form a complex with the suitable copper ions intended to form the copper alginate salts. Preferably in such plant treatment compositions include a sufficient amount of copper alginates which ultimately provides between 0.5 ppm and 50,000 ppm of metallic copper in the form of Cu(I) and/or Cu(II) ions as applied to a plant or plant part.

In addition to the essential constituents disclosed above, the plant treatment compositions of the invention may include one or more further additional optional constituents which may be used to provide one or more further technical effects or benefits to the plant treatment compositions.

Optionally, but in certain cases preferably, the plant treatment compositions of the invention include adhesion promoters and/or plasticizers. Such materials enable a better and longer lasting adhesion of the plant treatment compositions of the invention to the surfaces being treated, e.g., plant surfaces, etc.

Once class of exemplary adhesion promoters include gelatinizing substances which include, but are not limited to, paraffin wax, beeswax, honey, corn syrup, cellulose carboxy-methylether, guar gum, carob gum, tracanth gum, pectin, gelatine, agar, cellulose carboxy-methylether sodium salt, cellulose, cellulose acetate, dextrines, cellulose-2-hydroxyethylether, cellulose-2-hydroxypropylether, cellulose-2-hydroxypro-pylmethylester, cellulosemethylether, cornstarch, sodium alginate, maltodextrin, xanthan gum, epsilon-caprolactampolymer, dia-tomeen soil, acrylic acid polymers, PEG-30 glyceryl-cocoat, PEG-200, hydrogenated glyceryl-palmitate, and any combinations thereof. In one example, an acrylic acid polymer is an acrylic acid polymer that is sold under the brand name Carbomar® (ex. Degussa.). Further suitable adhesive promoters include block copolymers EO/PO surfactants, as well as polymers such as polyvinylalcohols, polyvinylpyrrolidones, polyacrylates, polymethacrylates, polybutenes, polyisobutylenes, polystyrene, polyethyleneamines, polyethyleneamides, polyethyleneimines (Lupasol®, Polymin®), polyethers and copolymers derived from these polymers.

One or more plasticizers may also be present in the plant treatment compositions according to the invention, and many plasticizers may also function as adhesion promoters as well. Typically plasticizers are low molecular weight organic compounds generally with molecular weights between 50 and 1000. Examples include, but are not limited to: polyols (polyhydric alcohols), for example alcohols with many hydroxyl groups such as glycerol, glycerin, ethylene glycol, diethylene glycol, triethylene glycol, propylene glycol, dipropylene glycol, polyethylene glycol; polar low molecular weight organic compounds, such as urea, sugars, sugar alcohols, oxa diacids, diglycolic acids; and other linear carboxylic acids with at least one ether group, C₁-C₁₂ dialkyl phthalates. Further non-limiting examples of further useful plasticizers include ethanolacetamide; ethanolformamide; triethanolamines such as triethanolamine acetate; thiocyanates, such as sodium and ammonium thiocyanates.

When present, the adhesion promoters and/or plasticizers typically comprise between 0.0001 %wt. to about 10%wt., when the plant treatment compositions are provided as a concentrated composition, and alternately the adhesion promoters typically comprise between 0.01 %wt. to about 1 %wt., when the plant treatment compositions are provided as a either a tank mixed composition or ready-to use composition. It is understood that the adhesion promoter may be supplied as a separate constituent and not form a constituent of a concentrated composition the plant treatment compositions, but may be added as a co-constituent to a larger volume of a carrier, e.g., water such as when forming a tank mix composition for use.

In certain particularly preferred compositions of the invention an adhesion promoter and/or plasticizer is necessarily present as an essential constituent.

The composition of the invention may further contain one or more non-biologically active materials which include, but are not limited to one or more of: surfactants, solvents, e.g., nonaqueous solvents, safeners, binders, stabilizers, dyes, fragrances, pH buffers, pH adjusting agents, chelating agents, and lubricants according to the requirements of a particular plant treatment composition.

Non-limiting examples of surfactants useful in the plant treatment compositions of the invention include one or more of anionic, nonionic, cationic, amphoteric and zwitterionic surfactants, which can be used singly or in mixtures. Exemplary nonionic surfactants include polyoxyethylene alkyl ethers, polyoxyethylene alkyl allyl ethers, polyoxyethylene lanolin alcohols, polyoxyethylene alkyl phenol formalin condensates, polyoxyethylene sorbitan fatty acid esters, polyoxyethylene glycerol mono-fatty acid esters, polyoxypropylene glycol mono-fatty acid esters, polyoxyethylene sorbitol fatty acid esters, polyoxyethylene-castor oil derivatives, polyoxyethylene fatty acid esters, fatty acid glycerol esters, sorbitan fatty acid esters, sucrose fatty acid esters, polyoxyethylene polyoxypropylene block polymers, polyoxyethylene fatty acid amides, alkylol amides, and polyoxyethylene alkyl amines; aninonic surfactants include sodium salts of fatty acids such as sodium palmitate, ether sodium carboxylates such as polyoxyethylene lauryl ether sodium carboxylate, amino acid condensates of fatty acids such as lauroyl sodium sarcosine and N-lauroyl sodium glutamate, alkylarylsulfonates such as sodium dodecylbenzenesulfonate and diisopropylnaphthalenesulfonates, fatty acid ester sulfonates such as lauric acid ester sulfonates, dialkyl sulfosuccinates such as dioctyl sulfosuccinate, fatty acid amidosulfonates such as oleic acid amidosulfonate, formalin condensates of alkylarylsulfonates, alcohol sulfates such as pentadecane-2-sulfate, polyoxyethylene alkyl ether sulfates such as polyoxyethylene dodecyl ether sodium sulfate, polyoxyethylene alkyl phosphates such as dipolyoxyethylene dodecyl ether phosphates, styrene-maleic acid copolymers, and alkyl vinyl ether-maleic acid copolymers; and amphoteric surfactants such as N-laurylalanine, N,N,N-trimethylaminopropionic acid, N,N,N-trihydroxye thylaminopropionic acid, N-hexyl N,N-dimethylaminoacetic acid, 1-(2-carboxyethyl)-pyridiniumbetaine, and lecithin; exemplary cationic surfactants include alkylamine hydrochlorides such as dodecylamine hydrochloride, benzethonium chloride, alkyltrimethylammoniums such as dodecyltrimethylammonium, alkyldimethylbenzylammoniums, alkylpyridiniums, alkylisoquinoliniums, dialkylmorpholiniums, and polyalkylvinylpyridiniums.

Non-limiting examples of solvents useful in the plant treatment compositions of the invention include one or more of saturated aliphatic hydrocarbons such as: decane, tridecane, tetradecane, hexadecane, and octadecane; unsaturated aliphatic hydrocarbons such as 1-undecene and 1-henicosene; halogenated hydrocarbons; ketones such as acetone and methyl ethyl ketone; alcohols such as methanol, ethanol, butanol, and octanol; esters such as ethyl acetate, dimethyl phthalate, methyl laurate, ethyl palmitate, octyl acetate, dioctyl succinate, and didecyl adipate; aromatic hydrocarbons such as xylene, ethylbenzene, octadecylbenzene, dodecylnaphthalene, tridecylnaphthalene; glycols, glycol esters, and glycol ethers such as ethylene glycol, diethylene glycol, propylene glycol monomethyl ether, and ethyl cellosolve; glycerol derivatives such as glycerol and glycerol fatty acid ester; fatty acids such as oleic acid, capric acid, and enanthic acid; polyglycols such as tetraethylene glycol, polyethylene glycol, and polypropylene glycol; amides such as N,N-dimethylformamide and diethylformamide: animal and vegetable oils such as olive oil, soybean oil, colza oil, castor oil, linseed oil, cottonseed oil, palm oil, avocado oil, and shark oil; as well as mineral oils. Water and blends of water with one or more of the foregoing organic solvents are also expressly contemplated as being useful solvent constituents.

Non-limiting examples of stabilizers which may be used in the invention are one or more of antioxidants, light stabilizers, ultraviolet stabilizers, radical scavengers, and peroxide decomposers. Examples of the antioxidant are antioxidants of phenol type, amine type, phosphorus type, and sulfur type antioxidants. Examples of the ultraviolet stabilizer are that of benzotriazole type, cyanoacrylate type, salicylic acid type, and hindered amine type. Isopropyl acid phosphate, liquid paraffin, and epoxidized vegetable oils like epoxidized soybean oil, linseed oil, and colza oil may also be used as the stabilizer.

Non-limiting examples of chelating agents which may be any of those known to those skilled in the art such as the ones selected from the group comprising phosphonate chelating agents, amino carboxylate chelating agents, other carboxylate chelating agents, polyfunctionally-substituted aromatic chelating agents, ethylenediamine N,N'-disuccinic acids, or mixtures thereof. Further suitable phosphonate chelating agents to be used herein may include alkali metal ethane 1-hydroxy diphosphonates (HEDP) also known as ethydronic acid, alkylene poly (alkylene phosphonate), as well as amino phosphonate compounds, including amino aminotri(methylene phosphonic acid) (ATMP), nitrilo trimethylene phosphonates (NTP), ethylene diamine tetra methylene phosphonates, and diethylene triamine penta methylene phosphonates (DTPMP). Thy phosphonate compounds may be present either in their acid form or as salts of different cations on some or all of their acid functionalities. Preferred phosphonate chelating agents to be used herein are diethylene triamine penta methylene phosphonate (DTPMP) and ethane 1-hydroxy diphosphonate (HEDP or ethydronic acid). Such phosphonate chelating agents are commercially under the trade name DEQUEST® (ex. Degussa). Polyfunctionally-substituted aromatic chelating agents may also be useful in the compositions herein. See U.S. Pat. No. 3,812,044, issued May 21, 1974, to Connor et al. Preferred compounds of this type in acid form are dihydroxydisulfobenzenes such as 1,2-dihydroxy -3,5-disulfobenzene. An exemplary and preferred biodegradable chelating agent for use herein is ethylene diamine N,N'-disuccinic acid, or alkali metal, or alkaline earth, ammonium or substitutes ammonium salts thereof or mixtures thereof. Ethylenediamine N,N'-disuccinic acids, especially the (S,S) isomer have been extensively described in U.S. Pat. No. 4,704,233, Nov. 3, 1987, to Hartman and Perkins.

Further suitable chelating agents include amino carboxylates including include ethylene diamine tetra acetates, diethylene triamine pentaacetates, diethylene triamine pentaacetate (DTPA),N-hydroxyethylethylenediamine triacetates, nitrilotri- acetates, ethylenediamine tetrapropionates, triethylenetetraaminehexa- acetates, ethanol-diglycines, propylene diamine tetracetic acid (PDTA) and methyl glycine di-acetic acid (MGDA), both in their acid form, or in their alkali metal, ammonium, and substituted ammonium salt forms. Particularly suitable amino carboxylates to be used herein are diethylene triamine penta acetic acid, propylene diamine tetracetic acid (PDTA) which is, for instance, commercially available from BASF under the trade name Trilon FS® and methyl glycine di-acetic acid (MGDA). Yet further useful chelating agents include carboxylate chelating such as salicylic acid, aspartic acid, glutamic acid, glycine, malonic acid or mixtures thereof. Such one or more chelating agents may be included in acceptable amounts.

The plant treatment compositions may include one or more pH adjusting agents and/or pH buffers. Essentially an material which may be used to adjust the pH of the plant treatment compositions are considered suitable, non-limiting examples of which include one or more of inorganic acids, organic acids, bases, alkaline materials, hydroxides, hydroxide generators, a buffer, as well as mixtures thereof.

Also suitable as pH-adjusting agents are monoethanolamine compounds, such as diethanolamine and triethanolamine, and beta-aminoalkanol compounds, particularly beta-aminoalkanols having a primary hydroxyl group, and a mixture thereof. Further nonlimiting examples of pH-adjusting agents include alkali metal salts of various inorganic acids, such as alkali metal phosphates, polyphosphates, pyrophosphates, triphosphates, tetraphosphates, silicates, metasilicates, polysilicates, borates, carbonates, bicarbonates, hydroxides, and mixtures of same. It may also be suitable to use buffers such materials as aluminosilicates (zeolites), borates, aluminates and certain organic materials such as gluconates, succinates, maleates, citrates, and their alkali metal salts. A preferred pH-adjusting agent is an alkali metal hydroxide. Such buffers keep the pH ranges of the compositions of the present invention within acceptable limits.

Each of the foregoing non-biologically active materials which may be individually included in effective amounts. The total amounts of the one or more non-biologically active materials may be as little as 0.001%wt., to as much as 99.999%wt., based on the total weight of the plant treatment composition of which said non-biologically active materials form a part, particularly in final end-use concentrations of the plant treatment compositions as applied to the plant.

Preferred biologically and non-bio logically active materials which are preferred are those which are based on copper salts, which metals which may be complexed or bound to the alginates, as it is believed that such would form complexes which are potentially better retained.

The plant treatment compositions can be advantageously applied against a broad range of diseases in different crops. They may be applied as leaf, stem, root, into-water, seed dressing, nursery box or soil treatment compositions. Thus the plant treatment compositions of the invention can be applied to the seed, soil, pre-emergence, as well as post-emergence such as directly onto immature or mature plants. The plant treatment compositions of the invention can be applied according to conventional application techniques known to the art, including electrodynamic spraying techniques. It is hypothesized that at least the copper alginate salts are deposited and are retained on the plant matter surfaces after the carrier, viz., aqueous medium or aqueous organic solvent medium has evaporated.

The plant treatment compositions are believed to have broad applicability to pathogentic fungi and bacteria and other diseases in said plants and particularly food crops.

The plant treatment compositions are believed to have particular activity against pathogentic fungi, bacteria or other diseases in plants which are characterized to be resistant to copper or other metals, especially copper.

Citrus crop diseases which may be treated by the plant treatment compositions of the invention include: algal spot, melanose, scab, greasy spot, pink pitting, alternaria brown spot, phytophthora brown rot, sptoria spot, phytophthora foot rot, and citrus canker.

Field crop diseases which are treatable by the plant treatment compositions of the invention include: for alfalfa, cercospora leaf spot, leptosphaerulina leaf spot; for corn, bacteria stalk rot; for peanut, cercospora leaf spot; for potato and other tubers, early blight, late blight; for sugar beet, cercospora leaf spot, and for wheat, barley and oats, helminthosporium spot blotch, septoria leaf blotch.

Diseases of small fruits which are treatable by the plant treatment compositions of the invention include: for blackberry (including Aurora, Boysen, Cascade, Chehalem, Logan, Marion, Santiam, and Thornless Evergreen varietals), anthracnose, cane spot, leaf spot, pseudomonas blight, purple blotch, yellow rust; for blueberry, bacterial canker, fruit rot, phomopsis twig blight; for cranberry, fruit rot, rose bloom, bacterial stem canker, leaf blight, red leaf spot, stem blight, tip blight (monilinia); for currants and gooseberry, anthracnose, leaf Spot; for raspberry, anthracnose, cane spot, leaf spot, pseudomonas, blight, purple blotch, yellow rust; for strawberry, angular leaf spot (xanthomonas), leaf blight, leaf scorch, leaf spot.

Diseases of tree crops which are treatable by the plant treatment compositions of the invention include: in almond, apricot, cherry, plum, and prune trees and crops, bacterial blast (Pseudomonas), bacterial canker, coryneum blight (shot hole), blossom brown rot, black knot, cherry leaf spot; in apple trees and crops; anthracnose, blossom blast, european canker (nectria), shoot blast (Pseudomonas), apple scab, fire blight, collar root, crown rot; in avocado trees and crops, anthracnose, blotch, scab; in banana trees and crops, sigatoka (black and yellow types), black pitting; in cacao trees and crops, black pod, in coffee plants and crops, coffee berry disease (Collectotrichum coffeanum), bacterial blight (Pseudomonas syringae), leaf rust (Hemileia vastatrix), iron spot (Cercospora coffeicola), pink disease (Corticium salmonicolor); in filbert trees and crops, bacterial blight, eastern filbert blight, in mango trees and crops, anthracnose, in olive trees and crops, olive knot, peacock spot; in peach and nectarine trees and crops, bacterial blast (Pseudomonas), bacterial canker, bacterial spot (Xanthomonas), coryneum blight (shot dole), leaf curl, bacterial spot; in pear trees and crops, fire blight and blossom blast (Pseudomonas); in pecan trees and crops, kernel rot, shuck rot, (Phytophthora cactorum), zonate leaf spot (Cristulariella pyramidalis), ball moss, Spanish moss; in pistachio trees and crops, botryosphaeria panicle and shoot blight, botrytis blight, late blight (Alternaria alternate), septoria leaf blight; in quince trees and crops, fire blight, and in walnut trees and crops, walnut blight.

Diseases of small fruits which are treatable by the plant treatment compositions of the invention include: in green beans, brown spot, common blight, halo blight, in beets including table beets and beet greens, cercospora leaf spot; in carrots, alternaria leaf spot, cercospora leaf spot; in celery, celeriac, bacterial blight, cercospora early blight, septoria late blight; in crucifers such as broccoli, brussels sprout, cabbage, cauliflower, collard greens, mustard greens, and turnip greens, black leaf spot (Alternaria), black rot (Xanthomonas), downy mildew; in cucurbits such as cantaloupe, cucumber, honeydew, muskmelon, pumpkin, squash, watermelon, alternaria leaf spot, angular leaf spot, anthracnose, downy mildew, gummy stem blight, powdery mildew, watermelon bacterial fruit blotch; in eggplant, alternaria blight, anthracnose, phomopsis; in okra, anthracnose, bacterial leaf spot, leaf spots, pod spot, powdery mildew; in onions and garlic, bacterial blight, downy mildew, purple blotch; in peas, powdery mildew; in peppers, anthracnose, bacterial spot, cercospora leaf spot; in spinach, anthracnose, blue mold, cercospora leaf spot, white rust, in tomato, anthracnose, bacterial speck, bacterial spot, early blight, gray leaf mold, late blight, septoria leaf spot, and in watercress, cercospora, leaf spot.

Diseases of vines and fruits which are treatable by the plant treatment compositions of the invention include: in grapes, black rot, downy mildew, phomopsis, powdery mildew; in hops, downy mildew; in kiwi, Erwinia herbicola, Pseudomonas fluorescens, Pseudomonas syringae

The following further crops and diseases which are treatable by the plant treatment compositions of the invention include: in atemoya, anthracnose; in carambola, anthracnose; in chives, downy mildew; in dill, phoma leaf spot, rhizoctonia foliage blight; in ginseng, alternaria leaf blight, stem blight; in guava, anthracnose, red algae; in macadamia, anthracnose, phytophthora blight (P. capsici), raceme blight (Botrytis cinerea); in papaya, anthracnose; in parsley, bacterial blight (Pseudomonas sp.); in passion fruit, anthracnose; in sugar apple (Annona), Anthracnose, and in sycamore, Anthracnose.

Specific diseases of greenhouse and shadehouse crops which are treatable by the plant treatment compositions of the invention include: in non-bearing citrus plants, brown rot, citrus canker, greasy spot, melanose, pink pitting, scab; in cucumbers, angular leaf spot, downy mildew; in eggplant, alternaria blight, anthracnose; in tomato, anthracnose, bacterial speck, bacterial spot, early blight, gray leaf mold, late blight, septoria leaf spot.

Specific diseases of conifers which are treatable by the plant treatment compositions of the invention include: in Douglas fir, Rhabdocline Needlecast, in firs, needlecasts, in juniper, Antracnose, Phomopsis Twig Dieback, in Leyland cypress, Cercospora Needle Blight, in pine, needlecasts and in spruce, needlecasts.

The plant treatment compositions of the invention may be provided in a variety of product forms. In one such form a concentrated composition containing the copper alginate salts are provided in a form wherein the concentrated composition is intended to be blended or dispersed in a further fluid carrier such as water or other largely aqueous liquid, without further biologically active materials, as well as any other further desired biologically inactive constituents which are recognized as being a useful in the art. In a further product form, the plant treatment compositions of the invention are provided as a ready to use product wherein the copper alginate salts are provided in the said composition at a concentration which requires no further dilution but can be directly applied to plants, or crops, viz., as a ready to use composition. In a still further product form, the copper alginate salts are provided, as well as any other further desired biologically inactive constituents, in the form of a premix, or in the form of a concentrate which is intended to be added to further the carrier medium, such as an aqueous liquid which may, or may not include further constituents already present therein.

The plant treatment composition may also be provided in a powdered or solid form, e.g., a comminuted solid which can be dispersed into a fluid carrier or medium, in a concentrated form, which may be a solid, liquid, or a gel which is intended to be further dissolved or dispersed in a carrier medium, such as a liquid which may be pressurized or non-pressurized, e.g., water. Such a plant treatment composition is advantageously and conveniently provided as a dispersible or dilutable concentrate composition which is then used in a "tank mix" which may optionally include further compositions or compounds, including non-biologically active materials.

The plant treatment compositions of the invention may also be provided in any suitable or conventional packaging means. For example, conventional containers such as bottles, or sachets containing a solid, liquid or fluid composition enclosed within a water-soluble film may be conveniently provided particularly when the former are provided in premeasured unit dosage forms. The latter are particularly useful in avoiding the need for measuring or packaging and provides a convenient means whereby specific doses that the plant treatment compositions can be provided.

The following examples further illustrate the present invention.

### Examples

Plant treatment compositions according to the invention were produced and are identified as indicated following, wherein the amount of the indicated constituent is represented as parts by weight based on the total weight of the composition of which it formed a part. Additionally the amount of Cu(II) was calculated and indicated as parts per million for each of the following formulae.

| **Table 1** | | | |
|---|---|---|---|
| | E1 (wt%) | E2 (wt%) | E3 (wt%) |
| copper sulfate pentahydrate | 12.90 | 0.59 | 8.27 |
| Manugel® GMB | -- | 1.58 | 0.84 |
| Manugel® LBA | 3.22 | -- | -- |
| ammonia solution | 15.48 | 0.87 | 12.10 |
| sodium citrate | 12.90 | 1.00 | 18.96 |
| ammonium sulfate | 12.90 | -- | 18.80 |
| ammonium carbonate | -- | -- | -- |
| DI water | 42.58 | 95.95 | 40.92 |
| pH | 9.2 | 9.98 | 9.05 |
| Cu(II), ppm | 32840 | 1515 | 21068 |

The identity of the specific constituents indicated on Table 1 (as well as in the examples described later) are described with more specificity on the following Table 2:

| **Table 2** | |
|---|---|
| copper sulfate pentahydrate | anhydrous copper sulfate pentahydrate |
| Manugel® GMB | alginate, having an approx. molecular weight of 80,000 - 120,000 (ex. FMC) |
| Manugel® LBA | alginate, having an approximate molecular weight of about 18,000 (ex. FMC) |
| ammonia solution | aqueous solution containinq 30%wt. of NH₃ |
| sodium citrate | anhydrous sodium citrate |
| ammonium sulfate | anhydrous ammonium sulfate |
| ammonium carbonate | anhydrous ammonium carbonate |
| DI water | deionized water |

The compositions of Table 1 were produced in accordance with the following general protocol.

Measured amounts of deionized water at room temperature (approx. 20°C) was provided to a suitable mixing vessel, to which were subsequently added during mixing of the contents of the mixing vessel in the following sequence, copper sulfate pentahydrate, when present, citrates, e.g., ammonium citrate and sodium citrate, and ammonium sulfate (which may alternately have been provided as an aqueous ammonia solution as indicated on Table 2) Mixing continued until all added constituents were dissolved and the aqueous composition was uniform. Subsequently the alginate constituent was slowly added during stirring until the alginate was dissolved in the aqueous composition which was present in the mixing vessel, and subsequently the formed plant treatment composition was withdrawn.

The composition E1 of Table 1 was subjected to various further tests in order to evaluate the stability of the composition.

Two samples of E1 were placed in an oven at 54°C. One was removed after one week, while the other sample was removed after two weeks. The samples were tested for suspensibility, foam, pH, viscosity, and wet sieve retention.

Viscosities were measured using a Brookfield viscometer equipped with spindle number 62 at 100 rpm. Suspensibility was determined gravimetrically by measuring total % solids of the initial diluted solutions and that of the bottom 10% after a ½ hour settling time. The results are given in the following tables. Sedimentation was tested as no sediment is believed to form in the composition. The results are reported on the following Table 3.

| **Table 3** | **Viscosity of Concentrate (cp)** | | | |
|---|---|---|---|---|
| **E1** | | **pH of Concentrate** | **% Retained on 100 Mesh Screen** | **% Retained on 325 Mesh Screen** |
| 0 Weeks Old | 91.8 | 9.83 | 0.04 | 0.05 |
| 1 Week Old | 195.3 | 9.78 | 0.05 | 0.05 |
| 2 Weeks Old | 389.5 | 9.80 | 0.14 | 0.19 |

The following table refers to testing performed on the samples diluted to 500 ppm in hard water.

| **Table 4** | **Temp (°C)** | **Dilution Water Hardness** | | **Viscosity (cp)** | | |
|---|---|---|---|---|---|---|
| **E1** | | | **pH** | | **Foam** | **Suspensibility** |
| 1 Week Old | 25 | 342 | 9.13 | ∼1 | None | 97.62 |
| 1 Week Old | 0 | 342 | 9.52 | ∼1 | None | 97.15 |
| 1 Week Old | 25 | 1000 | 9.05 | ∼1 | None | 97.11 |
| 1 Week Old | 0 | 1000 | 9.5 | ∼1 | None | 98.26 |
| 2 Week Old | 25 | 342 | 9.14 | ∼1 | None | 99.15 |
| 2 Week Old | 0 | 342 | 9.56 | ∼1 | None | 99.93 |
| 2 Week Old | 25 | 1000 | 9.10 | ∼1 | None | 98.88 |
| 2 Week Old | 0 | 1000 | 9.49 | ∼1 | None | 95.29 |

Three samples of E1 were placed in a freezer held at 0°F and left overnight. The next day, the samples were removed and allowed to thaw and equilibrate to room temperature. Upon thawing, they resumed their usual appearance- no clumping, precipitation, or other unusual behavior. The viscosity of one of them was measured and the other two were placed back in the freezer. The cycle was repeated until the last sample had been frozen three times. The Table 5 below summarizes the viscosity measurements.

| **Table 5** | |
|---|---|
| **Cycle #** | **Viscosity (cp)** |
| 1 | 92.4 |
| 2 | 97.8 |
| 3 | 76.5 |

Further examples of formulation of a plant treatment compositions falling within the scope of the invention are demonstrated by the following further examples.

### Example E4

The following were blended together in a 1 liter beaker using magnetic stirring.

| **Material** | **Mass (grams)** | **Wt% of Final Mixture** |
|---|---|---|
| DI water | 844.8 | 99.58 |
| ammonium carbonate | 1.09 | 0.13 |
| copper sulfate | 1 | 0.12 |
| 30% ammonia Solution | 1.2 | .014 |

Then, 0.25 grams (0.03% of the total) of Manugel LBA were added and the mixture was stirred until homogeneous. In addition to the ammonia solution, further ammonia was formed by the in situ reaction of ammonium carbonate in water and thus provided to the composition. The resulting copper concentration (Cu (II)) was 300 parts per million by weight and the pH was 9.14.

### Example E5

The following were blended together in a 1 liter beaker using magnetic stirring:

| **Material** | **Mass (grams)** | **Wt% of Final Mixture** |
|---|---|---|
| DI water | 845.6 | 99.68 |
| ammonium carbonate | 1.5 | 0.18 |
| copper sulfate | 1 | 0.12 |

Then, 0.25 grams (0.03% of the total) of Manugel LBA were added and the mixture was stirred until homogeneous. Ammonia was formed by the in situ reaction of ammonium carbonate in water. The resulting copper concentration was 300 parts per million by weight and the pH was 8.94.

### Example E6

The following were blended together in a 1 liter beaker using magnetic stirring:

| **Material** | **Mass (grams)** | **Wt% of Final Mixture** |
|---|---|---|
| DI water | 844.7 | 99.51 |
| ammonium acetate | 1.75 | 0.21 |
| copper sulfate | 1 | 0.12 |
| 30% ammonia solution | 1.2 | 0.14 |

Then, 0.25 grams (0.03% of the total) of Manugel LBA were added and the mixture was stirred until homogeneous. The resulting copper concentration was 300 parts per million by weight and the pH was 8.53.

### Example E7

The following were blended together in a 1 liter beaker using magnetic stirring.

| **Material** | **Mass (grams)** | **Wt% of Final Mixture** |
|---|---|---|
| DI water | 840 | 99.71 |
| copper sulfate | 1 | 0.12 |
| 30% ammonia solution | 1.2 | 0.14 |

Then, 0.25 grams (0.03% of the total) of Manugel LBA were added and the mixture was stirred until homogeneous. Finally, carbon dioxide was bubbled up through the mixture until the pH was 7.48. As the pH change was almost instantaneous upon contact with carbon dioxide, the actual mass of carbon dioxide in the formula is assumed to be negligible. The resulting copper concentration was approximately 302 parts per million by weight.

### Example E8

The following were blended together in a 1 liter beaker using magnetic stirring.

| **Material** | **Mass (grams)** | **Wt% of Final Mixture** |
|---|---|---|
| DI water | 844.7 | 99.71 |
| copper sulfate | 1 | 0.12 |
| 30% ammonia solution | 1.2 | 0.14 |

Then, 0.25 grams (0.03% of the total) of Manugel LBA were added and the mixture was stirred until homogeneous. Finally, the pH of the mixture was adjusted to 8.53 using citric acid. The copper concentration was approximately 302 parts per million by weight.

The actual concentration of the sodium alginate and the copper sulfate can be different than those given above, and may be any which is found to be effective in order to provide a copper salt alginate as an end product. These amounts can be determined by routine experimental methods. It is expressly contemplated that the compositions may be further varied, e.g, the use of alginates having lesser or greater molecular weights; the use of alginates of two or more different types or molecular weights; and yet fall within the teaching of the present invention. It is further expressly contemplated that certain of the example compositions, e.g. composition E1, may be diluted or dispersed in a larger volume of a carrier solvent, e.g., water, and optionally one or more further optional constituents, e.g., buffers, chealants, surfactants, organic solvents, and thereafter applied to a plant, plant part, or crop.

### (B) Field Trials

### (B.1) Control of Citrus Bacterial Canker on Grapefruit

Duncan grapefruit plants (seedlings) were cut back to encourage new plant growth susceptible to the citrus canker bacterium. Once the foliage had grown out and were susceptible to inoculation, the plants were sprayed with an aqueous dilution of the E1 composition of Table 1 as indicated in the following Table 6 to runoff to ensure good coverage of the leaves. Thereafter, the plants were inoculated with an aqueous bacterial culture of the citrus canker bacterium, (*Xanthomonas axonopodis* pv. *citri),* adjusted to contain 1 x 10⁸ colony forming units ("CFU") per ml. The plants were inoculated by spraying them to runoff with the said aqueous bacterial culture, after which the individual plants were sealed in polyethylene bags for 40 hours and retained in a greenhouse, after which the bags were removed. Approximately 40 days following the initial treatment followed by inoculation, the intensity of the bacterial spots at disease caused by the citrus canker bacterium was estimated by observing the percent of the leaf area affected by the bacterial spots. These were compared to a control grapefruit plant which had not been treated with a composition from Table 6, but which had only been inoculated with the aqueous bacterial culture of the citrus canker bacterium. The rating evaluations were based on a randomized complete block design; multiple replicates of grapefruit plants for each of the compositions from Table 6 were evaluated. Disease ratings are based on the Horsfall-Barret scale, wherein a rating of: 1 indicated 0% defoliation, 2 indicated 0-3% defoliation, 3 indicated 3-6% defoliation, 4 indicated 6-12% defoliation, 5 indicated 12-25% defoliation, 6 indicated 25-50% defoliation, and up to a rating of 12 indicating 100% defoliation. Two comparative compositions based on commercially available copper containing compositions, "Kocide 2000" (ex. DuPont) and "Cuprofix Ultra 40" described to comprise 71.1%wt. copper sulfate, equivalent to 40% metallic copper, and the balance being other unspecified ingredients (ex. Cerexagri-Nisso LLC, King of Prussia, PA), were applied at the application rates indicated on Table 6 as well, and compared to both plants treated with aqueous dilutions of E1, as well as to the untreated but inoculated control grapefruit plants.

| **Table 6** | | |
|---|---|---|
| Treatment Composition | Application Rate of Treatment Composition-(Cu) | Disease ratings |
| T1 - aqueous dilution of E1 | 45 ppm | 1.5 |
| T2 - aqueous dilution of E1 | 90 ppm | 2 |
| T3 - aqueous dilution of E1 | 154 ppm | 1.5 |
| T4 - aqueous dilution of E1 | 309 ppm | 1 |
| T5 - aqueous dilution of E1 | 3830 ppm | ---- |
| C1 - Kocide 2000 | 3830 ppm | 1.5 |
| C2 - Cuprofix Ultra 40 | 3830 ppm | 1.5 |
| Control | ---- | 3.7 |

| | | |
|---|---|---|
| "Application Rate of Treatment Composition - (Cu)" refers to the concentration of Cu(II) ions as indicated for the Treatment Composition | | |

Of the above results, the T5 composition was not rated as extensive tissue death was observed in the treated grapefruit plants. The commercially available products provided approximately tenfold amounts of available copper in order to obtain comparative degrees of control provided by the T1 to T4 compositions.

### (B.2) Control of Citrus Bacterial Canker on Swingle Orange

In a greenhouse, Swingle orange plants (seedlings) *(Citrus sinensis)* in 1 gallon pots were cut back to encourage new plant growth susceptible to the citrus canker bacterium. Once the foliage had grown out and were susceptible to inoculation, the plants were sprayed using a handheld aerosol canister to runoff to ensure good coverage of the leaves with varying aqueous dilutions of the E1 composition of Table 1 as indicated in the following Table 7. Four plants were used as replicates per dilution of E1 tested. On the next day, these treated plants were inoculated with an aqueous bacterial culture of the citrus canker bacterium, (*Xanthomonas axonopodis* pv. *citri),* adjusted to contain 1 x 10⁸ colony forming units ("CFU") per ml. The plants were inoculated by spraying them to runoff with the said aqueous bacterial culture, after which the individual plants were allowed to stand in the greenhouse. Subsequently, 22 days after this initial inoculation, the intensity of the bacterial spots caused by the citrus canker bacterium was estimated by observing the percent of the leaf area affected by the bacterial spots. These were compared to a control grapefruit plant which had not been treated with a composition from Table 7, but which had only been inoculated with the aqueous bacterial culture of the citrus canker bacterium, as well as with plants treated with compositions of "Kocide 2000" (ex. DuPont) and "Cuprofix Ultra 40" which were used as comparative examples. Subsequently, at 34 days after the first treatment, the plants were again treated with the varying aqueous dilutions of the E1 composition of Table 1 as indicated in the following Table 7, and on the next day, the plants were again inoculated with an aqueous bacterial culture of the citrus canker bacterium, *(Xanthomonas axonopodis* pv. *citri*), adjusted to contain 1 x 10⁸ colony forming units ("CFU") per ml. as described above, and again the treated and inoculated plants were allowed to stand in the greenhouse. All plants were evaluated at 62 days, and 69 days after the initial inoculation for the intensity of the bacterial spots caused by the citrus canker bacterium which was estimated by observing the percent of the leaf area affected by the bacterial spots. The results are reported on Table 7, following. The rating evaluations were based on a randomized complete block design; multiple replicates of the orange plants for each of the compositions from Table 7 were evaluated. Disease ratings are based on the Horsfall-Barret scale, wherein a rating of: 1 indicated 0% defoliation, 2 indicated 0-3% defoliation, 3 indicated 3-6% defoliation, 4 indicated 6-12% defoliation, 5 indicated 12-25% defoliation, 6 indicated 25-50% defoliation, and up to a rating of 12 indicating 100% defoliation.

| **Table 7** | | | | | |
|---|---|---|---|---|---|
| Treatment Composition | Application Rate of Treatment Composition onto Plant | Application Rate of Treatment Composition - (Cu) | Disease ratings, at days post initial inoculation | | |
| | | | 34 days | 62 days | 69 days |
| T6 - aqueous dilution of E1 | 1.1 ml/Litre water | 35 ppm | 2.3 | 2.1 | 3.9 |
| T7 - aqueous dilution of E1 | 2.2 ml/Litre water | 70 ppm | 2.7 | 2.3 | 3.9 |
| T8 - aqueous dilution of E1 | 3.7 ml/Litre water | 118 ppm | 2.4 | 2.5 | 3.1 |
| T9 - aqueous dilution of E1 | 7.5 ml/Litre water | 240 ppm | 1.6 | 2.4 | 2.7 |
| T10 - aqueous dilution of E1 | 85.6 ml/Litre water | 2740 ppm | 2.1 | 1.2 | 1.2 |
| C3 - Kocide 2000 | diluted, as supplied to 10.9 g/Litre water | 3815 ppm | 2.4 | 1.6 | 2.4 |
| C4 - Cuprofix Ultra 40 | diluted, as supplied to 9.6g/Litre water | 3840 ppm | 2.5 | 1.9 | 2.1 |
| Control | ---- | ---- | 3.2 | 4.8 | 5.1 |

| | | | | | |
|---|---|---|---|---|---|
| "Application Rate of Treatment Composition - (Cu)" refers to the concentration of Cu(II) ions as indicated for the Treatment Composition | | | | | |

The above results demonstrate the excellent efficacy of the treatment compositions of the invention compared to the commercial products.

### (B.3) Control of Citrus Bacterial Canker on Walnuts

The efficacy of the inventive compositions, as well as compositions of a commercial product, "Cuprofix Ultra 40" in controlling walnut blight (*Xanthomonas arboricola pv juglandis*) was evaluated. A series of walnut trees in an existing orchard (variety: *Juglans regia,* e.g., "common walnut") were tested by successively spraying the trees with one of the several compositions indicated on Table 8. The average age of the trees was 20 years. Four trees were used as replicates for testing the efficacy of a specific compositions, and these were compared to a four untreated trees which were used as a control sample, as well as a further set of four trees which were treated with a dilution of the "Cuprofix Ultra 40" which was used as supplied from the manufacturer and diluted in water which was used as a comparative example. The compositions were applied by spraying the leaves of each tree using a Solomist-type sprayer, with 1/8 inch nozzles which were applied at a rate of 100 gallons/acre. The trees of the respective set of replicates were initially treated with the compositions of Table 8, as well as retreated at 11 days, 29 days and 37days following the initial treatment. The incidence of disease was evaluated by a trained observer, at 59 days and 93 days following the initial treatment who indicated each of the % of infected leaves per tree, the number of infected flowers per tree, as well as the severity of the disease which was observed by reviewing the leaves of the tree, with a value of "0" indicating no infection, and a value of "10" indicating total infection. The ratings were based on the average from each of the 4 trees per replicate set which was treated with a specific composition.

| **Table 8** | | | | | | | | |
|---|---|---|---|---|---|---|---|---|
| Treatment Composition | Application Rate of Treatment Composition | Application Rate of Treatment Composition - (Cu) | Disease incidence (% infected leaves/tree) | | Number of infected flowers per tree | | Disease Severity (leaf infection) | |
| | | | 59 days | 93 days | 59 days | 93 days | 59 days | 93 days |
| T11 - aqueous dilution of E1 | 32 oz. E1/100 gal water | 80 ppm | 4.8 | 7 | 5.8 | 5.2 | 3.4 | 3.0 |
| T12 - aqueous dilution of E1 | 64 oz. E1/100 gal water | 160 ppm | 5.4 | 8.2 | 5.4 | 1.6 | 3.0 | 3.2 |
| T13 - aqueous dilution of E1 | 96 oz. E1/100 gal water | 240 ppm | 5.9 | 10 | 7.6 | 6.2 | 4.6 | 3.6 |
| T14 - aqueous dilution of E1 | 128 oz. E1/100 gal water | 320 ppm | 7.6 | 12.8 | 5.8 | 2.0 | 4.4 | 3.6 |
| Cuprofix Ultra 40 | 8 lbs./100 gal water | 3750 ppm, | 5.4 | 5.8 | 3.2 | 1.0 | 3.2 | 3.0 |
| Untreated control | -- | -- | 15.2 | 19.4 | 14.8 | 18.2 | 4.4 | 4.0 |

| | | | | | | | | |
|---|---|---|---|---|---|---|---|---|
| "Application Rate of Treatment Composition - (Cu)" refers to the concentration of Cu(II) ions as indicated for the Treatment Composition | | | | | | | | |

As evident from the foregoing, the inventive compositions exhibited excellent control of the walnut blight, notwithstanding low levels of copper (Cu (II)) as compared to the commercial product.

### (B.4) Control of Fire Blight on Apples and Pear Trees

The efficacy of the inventive compositions, as well as compositions of a commercial product, "Kocide 3000" in controlling fire blight *(Xanthomonas arboricola pv juglandis*) was evaluated. Each of a series of apple trees (apple variety: Red Delicious) approximately 20 years old, and pear trees (pear variety: D'Anjou) approximately 25 years old in existing orchards were used for the test. The trees were inoculated with a bacterial "Fire Blight" pathogen *(Erwinia amylovora,* strain Ea. 153al) which was isolated in Oregon (U.S.A.) which was cultivated on a nutrient agar, and then diluted to provide a concentration of about 1 million colony forming units ("CFU") per ml of water, viz., the inoculant. Inoculation was performed by spraying the inoculant using a non-pressurized trigger-pump sprayer to mist the inoculant onto about 100 blossom clusters per replicate (tree) to ensure that the blossoms were fully wetted but not to the point of dripping. Both the pear and apple trees were first sprayed with a tested composition of Table 9 on a day of which approximately 80% of the blossoms were in bloom, inoculated with the inoculant as described above on the next day, and on the next following day, the trees were again sprayed with a respective test composition. The test compositions were sprayed using a backpack sprayer operating at an application rate of approximately 100 gallons per acre of a tested treatment composition. The test also included a comparative sample, "Kocide 3000" (ex. DuPont) which was diluted in water and applied as the test compositions.

Following treatment, the treated trees were periodically evaluated for approximately 7 weeks, and the number of blighted blossom clusters were noted and indicated as a percentage relative to the initial inoculated blossom clusters. It was concurrently observed that there were no naturally occurring infections in the non-inoculated trees in the area during the test. The observed results are also reported on Table 9. The ratings were based on the average from each of the 4 trees per replicate set which was treated with a specific treatment composition. Both the percent of infection ("% infection") among the blossoms, and the relative degree of control ("% control") relative to the inoculated but untreated control replicates are reported.

| **Table 9** | | | |
|---|---|---|---|
| Apples | | | |
| Treatment Composition | Application Rate of Treatment Composition - (Cu) | % infection | % control |
| T15 - aqueous dilution of E1 of 4 quarts per 100 gallons | 320 ppm | 2.7 | 95.5 |
| T16 - aqueous dilution of E1 of 2 quarts per 100 gallons | 160 ppm | 4.6 | 92.4 |
| T17 - aqueous dilution of E1 of 1 quart per 100 gallons | 80 ppm | 33.7 | 44.2 |
| C3 - Kocide 3000 diluted at 0.5 lbs per 100 gallons | 175 | 23.5 | 61.1 |
| Control - inoculated, untreated | ---- | 64.4 | 0 |
| Control - uninoculated, untreated | ---- | 0 | 0 |

| Pears | | | |
|---|---|---|---|
| Treatment Composition | Application Rate of Treatment Composition - (Cu) | % infection | % control |
| T15 - aqueous dilution of E1 of 4 quarts per 100 gallons | 320 ppm | 1 | 98.4 |
| T16 - aqueous dilution of E1 of 2 quarts per 100 gallons | 160 ppm | 8 | 87.6 |
| T17 - aqueous dilution of E1 of 1 quart per 100 gallons | 80 ppm | 30.1 | 53.3 |
| C3 - Kocide 3000 diluted at 0.5 lbs per 100 gallons | 175 ppm | 28.2 | 56.3 |
| Control - inoculated, untreated | ---- | 64.5 | 0 |
| Control - uninoculated, untreated | ---- | 0 | 0 |

| | | | |
|---|---|---|---|
| "Application Rate of Treatment Composition - (Cu)" refers to the concentration of Cu(II) ions as indicated for the Treatment Composition | | | |

## Claims

1. Plant treatment compositions useful in the treatment of plants, particularly food crops, in order to control the incidence of and / or spread of pathogenic fungi and bacteria and other diseases in said plants, and to provide improved plant health and / or food crop yields, the plant treatment compositions comprising copper alginate salts and at least one amine compound and/or ammonia as compositions useful in the treatment of plants, particularly food crops; wherein the said compositions exclude other pest-controlling active ingredients and plant growth-regulating active ingredients.

2. Plant treatment compositions according to claim 1 comprising Cu(II) salts of alginic acid.

3. Plant treatment compositions according to claim 1 or claim 2, wherein the amine compound is selected from the group consisting of: ammonia, a primary amine, a secondary amine and a tertiary amine compound, as well as salts thereof.

4. Plant treatment compositions according to claim 3 wherein the amine compound comprises ammonia.

5. Methods for the treatment of plants, including food crops in order to control the incidence of and/or spread of pathogentic fungi and bacteria and other diseases in said plants and particularly food crops and providing improved plant health and/or food crop yields, which method comprises the application of a plant treatment composition according to any of claims 1 - 4 to a plant, plant part or crop.

6. Use of a plant treatment composition according to any of claims 1 - 4 in the treatment of tomato plants for controlling the incidence and spread of undesired bacterial pathogens, e.g., bacterial spot, such as may be caused by genus *Xanthomonas,* e.g, *Xanthomonas campestris* pv. *vesicatoria;* bacterial speck, such as may be caused by genus *Pseudomonas* e.g., *Pseudomonas syringae* PV *tomato;* and citrus canker, such as may be caused by genus *Xanthomonas* e.g., *Xanthomonas axonopodis* pv. *Citri.*

## Patentansprüche

1. Pflanzenbehandlungszusammensetzungen, geeignet zur Behandlung von Pflanzen, insbesondere Nahrungspflanzen, zur Bekämpfung des Auftretens und/oder der Ausbreitung von pathogenen Pilzen und Bakterien und anderen Krankheiten in den Pflanzen und zur Bereitstellung von verbesserte(r/n) Pflanzengesundheit und/oder Nahrungspflanzenerträgen, wobei die Pflanzenbehandlungszusammensetzungen Kupferalginat-Salze und mindestens eine Aminverbindung und/oder Ammoniak als für die Behandlung von Pflanzen, insbesondere Nahrungspflanzen, geeignete Zusammensetzungen umfassen, wobei die Zusammensetzungen keine anderen Wirkstoffe zur Schädlingsbekämpfung und das Pflanzenwachstum regulierenden Wirkstoffe enthalten.

2. Pflanzenbehandlungszusammensetzungen nach Anspruch 1, die Cu(II)-Salze der Alginsäure umfassen.

3. Pflanzenbehandlungszusammensetzungen nach Anspruch 1 oder Anspruch 2, wobei die Aminverbindung aus der Gruppe ausgewählt wird, bestehend aus: Ammoniak, einer primären Amin-, einer sekundären Amin- und einer tertiären Aminverbindung sowie deren Salzen.

4. Pflanzenbehandlungszusammensetzungen nach Anspruch 3, wobei die Aminverbindung Ammoniak umfasst.

5. Verfahren zur Behandlung von Pflanzen, einschließlich Nahrungspflanzen, zur Bekämpfung des Auftretens und/oder der Ausbreitung von pathogenen Pilzen und Bakterien und anderen Krankheiten in den Pflanzen und insbesondere Nahrungspflanzen und Bereitstellung von verbesserte(r/n) Pflanzengesundheit und/oder Nahrungspflanzenerträgen, wobei das Verfahren die Applikation einer Pflanzenbehandlungszusammensetzung nach einem der Ansprüche 1-4 auf eine Pflanze, einen Pflanzenteil oder eine Erntepflanze umfasst.

6. Verwendung einer Pflanzenbehandlungszusammensetzung nach einem der Ansprüche 1-4 zur Behandlung von Tomatenpflanzen zur Bekämpfung des Auftretens und der Ausbreitung ungewünschter bakterieller Pathogene, z.B. Bakterielle Schwarzfleckenkrankheit (bacterial spot), wie sie von der Gattung *Xanthomonas,* z.B. *Xanthomonas campestris* pv. *vesicatoria,* hervorgerufen werden kann; Blattfleckenkrankheit (bacterial speck), wie sie von der Gattung *Pseudomonas,* z.B. *Pseudomonas syringae* PV tomato, hervorgerufen werden kann; und Zitruskrebs (citrus canker), wie er von der Gattung *Xanthomonas,* z.B. *Xanthomonas axonopodis* pv. Citri, hervorgerufen werden kann.

## Revendications

1. Compositions de traitement de plantes utiles dans le traitement de plantes, particulièrement de cultures alimentaires, afin de contrôler l'incidence et/ou la propagation de bactéries et de champignons pathogènes et autres maladies chez lesdites plantes, et afin de fournir une santé des plantes et/ou des rendements de cultures alimentaires améliorés, les compositions de traitement de plantes comprenant des sels d'alginate de cuivre et au moins un composé d'amine et/ou de l'ammoniaque comme compositions utiles dans le traitement de plantes, particulièrement de cultures alimentaires ; **caractérisées en ce que** lesdites compositions excluent d'autres ingrédients actifs de contrôle des nuisibles et ingrédients actifs de type substances de croissance.

2. Compositions de traitement de plantes selon la revendication 1, comprenant des sels de Cu(II) de l'acide alginique.

3. Compositions de traitement de plantes selon la revendication 1 ou la revendication 2, **caractérisées en ce que** le composé d'amine est choisi dans le groupe constitué par l'ammoniaque, une amine primaire, une amine secondaire et un composé d'amine tertiaire, ainsi que des sels de ceux-ci.

4. Compositions de traitement de plantes selon la revendication 3, **caractérisées en ce que** le composé d'amine comprend de l'ammoniaque.

5. Méthodes de traitement de plantes, y compris des cultures alimentaires, afin de contrôler l'incidence et/ou la propagation de bactéries et de champignons pathogènes et autres maladies chez lesdites plantes, et particulièrement des cultures alimentaires, et afin de fournir une santé des plantes et/ou des rendements de cultures alimentaires améliorés, laquelle méthode comprend l'application d'une composition de traitement de plantes selon l'une quelconque des revendications 1-4 à une plante, une partie de plante ou une culture.

6. Utilisation d'une composition de traitement de plantes selon l'une quelconque des revendications 1-4, dans le traitement de plants de tomate pour le contrôle de l'incidence et de la propagation de pathogènes bactériens indésirables, par exemple la tache bactérienne, telle que celle pouvant être provoquée par le genre *Xanthomonas,* par exemple *Xanthomonas campestris* pv. *vesicatoria ;* la moucheture bactérienne, telle que celle pouvant être provoquée par le genre *Pseudomonas,* par exemple *Pseudomonas syringae* pv. *tomato ;* et le chancre bactérien des agrumes, tel que celui pouvant être provoqué par le genre *Xanthomonas,* par exemple *Xanthomonas axonopodis* pv. citri.
